# EUROPEAN PATENT SPECIFICATION

(11) **EP 3 290 823 B1**
(45) Date of publication and mention of the grant of the patent: **02.12.2020**
(21) Application number: 15894159.1
(22) Date of filing: 02.06.2015
(51) Int. Cl.: F24S 80/20, F24S 40/60

(54) **SOLAR HEAT COLLECTION SYSTEM**
SONNENWÄRMESAMMELSYSTEM
SYSTÈME COLLECTEUR DE CHALEUR SOLAIRE

(43) Date of publication of application: 07.03.2018
(73) Proprietor: Chiyoda Corporation, Kanagawa 220-8765 (JP)
(72) Inventor: HINO, Koichi, Yokohama-shi Kanagawa 220-8765 (JP)
(74) Representative: Prüfer & Partner mbB Patentanwälte · Rechtsanwälte
(86) International application number: PCT/JP2015/065849
(87) International publication number: WO 2016/194124

(56) References cited:
- WO-A2-2014/135567
- JP-A- 2014 531 552
- JP-B2- S5 640 257
- JP-Y2- S6 135 885
- US-A1- 2004 108 099
- US-A1- 2010 199 974
- US-A1- 2013 056 081

## Description

### Technical Field

The present invention relates to a solar heat collection system having a plurality of heat medium channels for heat medium to flow.

### Background Art

As an example of a system that realizes an efficient and stable electric power supply using a reproducible energy, there is a power generation plant using a solar heat (for example, see Patent Literatures 1, 2 and 3).

In a power generation plant using the solar heat, the solar heat is collected by solar heat collection device, the collected heat is fed to a heat exchanger through a heat medium, so that water is changed into a steam by the heat, and a turbine is driven by the steam to generate an electric power.

The heat collected by the solar heat collection device can be stored in a heat storage device through the heat medium.
Then, when the stored heat is fed again to the heat exchanger through the heat medium at a time zone such as a night in which solar rays cannot be collected, electric power can be generated. In this way, electric power can be stably supplied.

As a heat medium used in a power generation plant, a synthetic oil is generally used. However, in recent years there has been an attempt to use a molten salt rather than a synthetic oil as such a heat medium.

When a heat medium that is a synthetic oil is replaced by a molten salt, the following advantages can be obtained.

First, it is possible to supply a higher temperature steam than prior art, so that one can expect an increased power generation efficiency and a reduced cost in power generation. Further, in a system that uses a molten salt as a heat medium, the capacity of a heat storage tank used in the system is allowed to be smaller than prior art. Moreover, since a conventional system (using a synthetic oil as a heat medium) also employs a molten salt as a heat storage medium, there is a need to exchange heat between the synthetic oil and the molten salt. In comparison, if an entire system is operated by using only a molten salt, the heat exchanger will become unnecessary and thus the plant can have a simpler configuration.

### Citation List

### Patent Literature

Patent Literature 1: US 2010/43776 A
Patent Literature 2: JP 2014-31787 A
Patent Literature 3 : US2013/0056081 A

### Summary of Invention

### Technical Problem

On the other hand, although the heat medium channels for circulating a heat medium to the solar heat collection device are configured to circulate the heat medium by a pump, there is a concern that the heat medium inside the heat medium channels needs to be discharged for maintenance or the like. Further, although the heat medium is circulated through the heat medium channels by pump, when the supply of electric power is interrupted due to a power failure or an accident or the pump is out of order, the circulation of the heat medium will be stopped. Here, when a molten salt or the like having a congealing point higher than an atmospheric temperature is used as a heat medium, there will be a concern that the heat medium which has become not flowable through the heat medium channels will be cooled and solidified during a relatively short time. At this time, the heat medium channels will be blocked by the solidified heat medium when the operation is to be resumed. Thus, there is a need to heat the heat medium channels to melt the heat medium. As a result, a considerable time and cost are needed in resuming the operation.

Therefore, for some reason, when a pump for circulating the heat medium is stopped, it is preferable to discharge the heat medium from the heat medium channels. Also, when discharging, it is preferable that a time taken for discharging is short.

Here, some problems that will be discussed later can occur where a plurality of solar heat collection devices are provided in a solar heat power plant, heat medium channels are provided in loop in each solar heat collection device, pipes are connected for supplying the heat medium to these heat medium channels and for collecting heat medium from the heat medium channels, and an arrangement is formed to discharge the heat medium from the heat medium channels via those pipes. On the other hand, in the above-mentioned heat medium channels and the pipes, it is necessary to have a height difference within the system to allow the heat medium to flow down so that the heat medium can be discharged even if the pump for circulating the heat medium stops.

In order to discharge the heat medium within a short time as described above, it is preferable to discharge the heat medium almost simultaneously in the respective solar heat collection devices. At this time, in order to cause the heat medium to flow down using a height difference, it is preferable to provide a vent which can be opened and closed (an openable and closable air hole) at the highest position of the heat medium channels.
Therefore, at the time of discharging the heat medium, the vent is opened to introduce air into the vent, so that heat medium can flow down the heat medium channels due to an inclination of the heat medium channels (a height difference).

Here, a solar heat power plant including a plurality of solar heat collection devices is provided, for example, on a large land. However, it is costly to prepare such a flat ground on a large land, and as mentioned above, it is necessary to form a height difference among pipes such as heat medium channels in order to let the heat medium flow out when the pump is stopped. In this way, it is allowed to consider installing pipes that allow heat medium to flow using a height difference by not flattening the land on which the power plant is located.

However, in this case, there is a high possibility that the heat medium channels of the respective solar heat collection devices are at different height levels. At this time, if the heat medium is caused to flow from a plurality of heat medium channels to the same pipe at the same time as described above, the heat medium may flow backward from higher medium channels to lower heat medium channels among the respective heat medium channels.

Further, in the pipes for supplying and discharging the heat medium to and from the heat medium channels, at the time of discharging the heat medium and if there is a difference in height between the pipes into which the heat medium flows, the heat medium to be discharged from the heat medium channels connected to the upper side of the pipe system will flow downwardly to the lower side of the height difference, and the pressure of the heat medium will be applied to the connection portion of the pipes of the heat medium channels connected to the lower side of the pipe system, causing a concern that the heat medium in the heat medium channels will flow backward opposite to the heat medium discharge direction.

Namely, in these cases, pressure acts on the heat medium within the heat medium channels on the side opposite to the discharge direction of the heat medium. As a result, the heat medium may flow out of an opened vent.

Accordingly, it is preferable to provide a prevention mechanism for preventing the heat medium from flowing to the vent of each heat medium channel. However, when a problem such as an operation failure or a damage of the prevention mechanism occurs, there is a concern that heat medium will flow out of the vent. At this time, it is difficult to predict which vent prevention mechanism will have a problem. Without the above-described prevention mechanism, there is a high possibility that the heat medium will flow out of vent in lower heat medium channels among a plurality of heat medium channels, and it is possible to predict a vent from which the heat medium flows out.

When there is a prevention function to prevent the heat medium from flowing out of vent, there is almost no outflow of the heat medium from a vent, and only when a problem occurs in the vent, there is a concern that the heat medium may flow out. In such case, it is difficult to predict from which vent heat medium flows out, and if heat medium flows out of a vent by any chance, it is difficult to predict a vent from which heat medium flows out, thus rendering it difficult to cope with an outflow of the heat medium.

For these reasons, even if there is a concern that the heat medium may flow out of vent, a structure which is unlikely to cause a problem is required.

The present invention has been accomplished in view of the above problems, and it is an object of the present invention to provide a solar heat collection system which can easily inhibit a leakage of heat medium to the outside of heat medium system (outside an equipment assumed for a heat medium to flow) and can cope with heat medium leakage, even if a heat medium accidently leaks out of a vent of a heat medium channel.

### Solution to Problem

In order to solve the afore-mentioned problems, a solar heat collection system of the present invention has a plurality of heat medium channels for heating a heat medium by virtue of solar heat and allowing the heat medium to flow. This solar heat collection system is capable of discharging the heat medium from the plurality of heat medium channels through the same discharge path, by introducing a gas into the heat medium channels from vents provided respectively on the heat medium channels. In particular, the solar heat collection system includes a header in connection with a plurality of vents, the header being configured to introduce a gas into the heat medium channels through the header.

According to the above configuration, when the heat medium flows out of vents due to a backflow of the heat medium at the time of discharging the heat medium, the heat medium will flow into the header, making it possible to prevent the heat medium from flowing to the outside of equipment including the header assumed to allow the heat medium to flow. In the following description, so-called "outside" basically means the outside of the header and the outside of equipment assumed to allow the heat medium of the heat medium channels to flow.

Further, although each vent basically has a valve, when the heat medium is caused to flow through the heat medium channel, since the heat medium flows depending on a pump, the interior of a heat medium channel will be under a positive pressure. As a result, there is a concern that if the valve of a vent breaks down or is damaged, the heat medium may leak from the vent. Using the above-described configuration, even if there is a possibility that the valve of the vent is broken or damaged by any chance, the heat medium leaking from the vent will flow into the header immediately without flowing out any further, thus making it possible to earn an enough time to cope with a malfunction or a damage of the vent.

In the above configuration of the present invention, it is preferable that the header is provided with an intake port capable of introducing air from outside of the header and from outside of the heat medium channel (the aforementioned outside).

According to such a configuration, a gas taken from the intake port flows from the header to each vent. On the other hand, when the heat medium flows out from one of the vents, the flowed-out heat medium will be accumulated in the header. However, if an amount of the heat medium flowing out is too large, the heat medium will still flow out through the intake port of the header.

In this case, since an outflow of the heat medium happens only at intake port, it is not necessary for each vent to be provided with a structure for preventing people from entering an area around the intake port, or a structure which can receive and store the heat medium so that the heat medium flowing out of the intake port will not flow out any further. Namely, it is possible to cope with the outflow of the heat medium by providing the above structure only at intake port of the header, thus reducing the cost in dealing with outflow problem of the heat medium.

Further, in the above configuration of the present invention, it is preferable that a gas introducing device for introducing a compressed gas into the header is provided in the header.

Using such a configuration, when the heat medium is to be discharged from each heat medium channel, a compressed gas is introduced from the header to each vent so that the heat medium can be discharged. In this way, it is not necessary to provide a compressor, a gas tank or the like to introduce the compressed gas into each vent, or to provide pipes for introducing the compressed gas into the respective vents. Therefore, it becomes possible to introduce a compressed gas to a plurality of heat medium channels at a low cost.

Note that the header can be used not only for introducing a compressed gas, but also for introducing an outer air as described above. Further, it is also possible to inhibit an outflow of the heat medium even when the vent valve breaks down or is damaged.

Further, in the above configuration of the present invention, it is preferable that a vent can be opened when the pressure in the heat medium channel is lower than the outer pressure.

According to such a configuration, by opening the heat medium discharge side of the heat medium channel, the pressure in the heat medium channel can be released, and furthermore, when the heat medium is about to move downwardly due to a load of the heat medium in the heat medium channel, at the time a pressure at a vent on the upper side of a heat medium channel has been reduced to be lower than an outside pressure, the vent can be opened. On the other hand, as described above, when a pressure of the vent is a positive pressure as in the case where the heat medium discharged from a heat medium channel at a higher position flows backward through a heat medium channel at a lower position, the vent is not opened. Therefore, it is possible to prevent the heat medium from flowing out of the vent to the header. Here, so-called "outside pressure" means, for example, an atmospheric pressure, while a state in which a pressure is lower than an outside pressure is, for example, a state of negative pressure.

When the heat medium flows into the header, the heat medium may solidify in the header. Considering a post-treatment, it is preferable that the heat medium does not flow out of the vent into the header as possible as it can be controlled.

Further, in the above configuration of the present invention, it is preferable that the system be provided with pressure measuring means for measuring a pressure in a heat medium channel, and vent control means for opening a vent when a pressure measured by the pressure measuring means becomes equal to or lower than a predetermined pressure.

According to such a configuration, when a heat medium in each heat medium channel is circulated by a pump, or when a heat medium is likely to flow back once the heat medium is discharged, a vent of the heat medium channel is not in a negative pressure but in a positive pressure, so that the vent will not be opened. In this way, it is possible to prevent the heat medium from flowing out of the vent into the header.

Further, in the above configuration of the present invention, it is preferable that a check valve be provided in a vent.

According to this configuration, since it is possible to use a check valve to prevent a heat medium from flowing out of a vent, it is thus possible to prevent the heat medium from flowing out of the bent into the header.

Further, in the above configuration of the present invention, it is preferable that a back pressure valve be provided in a vent.

According to such a configuration, it is possible to form a configuration that does not open if the vent portion is not equal to or lower than a predetermined pressure due to the back pressure of the back pressure valve, and it is possible to prevent the heat medium from flowing out of the vent to the header.

### Effects of Invention

According to the present invention, when a vent for introducing a gas at the time of discharging the heat medium is provided in a heat medium channel at the time solar heat is to be collected and transmitted by the heat medium, it is possible to prevent the heat medium from directly flowing out, even if the heat medium flows out of vent for some reason.

### Brief Description of Drawings

Fig. 1 is a schematic view showing a solar heat collection system according to a first embodiment of the present invention.
Fig. 2 is a schematic view showing a main portion of the system illustrated in Fig. 1.
Fig. 3 is a schematic view showing a main portion of a solar heat collection system according to a second embodiment of the present invention.
Fig. 4 is a schematic view showing a main portion of a solar heat collection system according to a third embodiment of the present invention.
Fig. 5 is a schematic view showing a main portion of a solar heat collection system according to a fourth embodiment of the present invention.
Fig. 6 is a schematic view showing a main portion of a solar heat collection system according to a fifth embodiment of the present invention.

### Description of Embodiments

### (First Embodiment)

A first embodiment of the present invention will be described in the following.

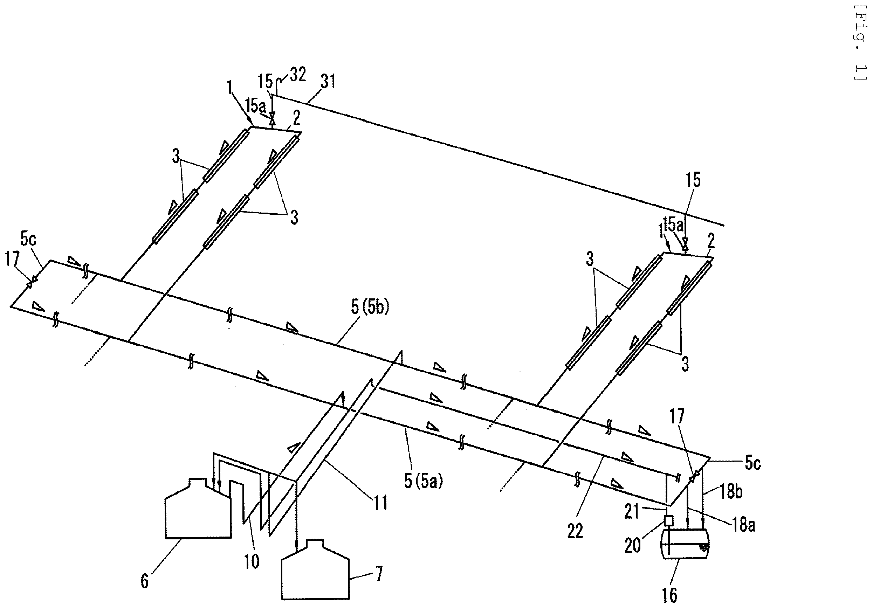

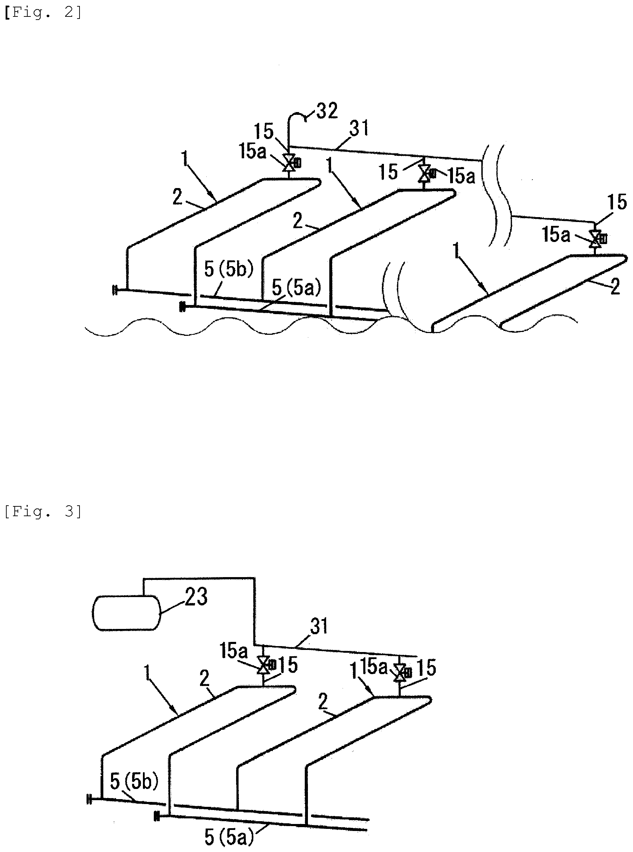

Fig. 1 and Fig. 2 show a schematic configuration of a solar heat collection system according to the first embodiment. The solar heat collection system comprises a plurality of solar heat collection devices 1. Although Fig. 1 shows only two solar heat collection devices 1, it is possible to have a large number (for example, 100 or more) of solar heat collection devices 1. A solar heat collected by the solar heat collection system is sent to a power generation system via a heat medium so as to generate electricity. A solar heat power plant is comprised of the solar heat collection system and the power generation system.

Each solar heat collection device 1 has, for example, a substantially U-shaped heat medium channel 2, which is heated by a sunlight collected by a collector mirror (light collecting means) 3. As a result, a temperature of the heat medium flowing through the heat medium channel 2 rises to about 550 ° C.

In present embodiment, a molten salt consisting of a mixture of sodium nitrate and potassium nitrate is used as a heat medium.

Also, in Fig. 1, what are indicated by small right triangles are gradient symbols. In accordance with these gradient symbols, heat medium channels 2 and inclined pipes 5 (to be described later) are inclined with respect to the horizontal plane.

The heat medium channel 2 of each solar heat collection device 1 is connected to inclined pipes 5. The inclined pipes 5 are formed into a loop shape, and their left end portions in Fig. 1 are higher than their right end portions. Namely, the inclined pipes 5 are inclined downwardly to the right in Fig. 1 with respect to the horizontal plane. The inclined pipes 5 include two inclined pipes 5a and 5b arranged in parallel, and one inclined pipe 5a and the other inclined pipe 5b are connected by a pipe 5c at either end thereof.

Two tanks 6, 7 are connected to the inclined pipes 5. The tanks 6, 7 store the heat medium, with the tank 6 storing a heat medium before being heated by the solar heat collection devices 1, and the tank 7 storing a heat medium that has already been heated by the solar heat collection devices 1. Therefore, hereinafter, the tank 6 will be referred to as a cold-side tank 6 and the tank 7 will be referred to as a hot-side tank 7.

The cold-side tank 6 and the inclined pipe 5a are connected to each other by a connecting pipe 10, and the heat medium is sent from the cold-side tank 6 to the inclined pipe 5a by a pump (not shown) provided in the cold-side tank 6. The heat medium sent to the inclined pipe 5a branches at a connection between the connecting pipe 10 and the inclined pipe 5a and a part of heat medium flows to the right along the inclination of the inclined pipe 5a and the remaining of the heat medium flows to the left against the gradient of the inclined pipe 5a

The hot-side tank 7 and the inclined pipe 5b are connected to each other by a connecting pipe 11, so that the heat medium heated by the solar heat collection device 1 is sent to the hot-side tank 7 by the pressure of the pump. Here, it is to be noted that the connecting pipe 11 can branch midway and can feed a heat medium to the cold-side tank 6 if necessary. For example, since the heat medium can not be heated by the solar heat collection device 1 during the night when the sun is not rising, the heat medium is fed only to the cold-side tank 6 by a switching valve provided in the branching position, thus preventing an unheated heat medium from being fed into the hot-side tank 7.

One end of the heat medium channel 2 of the solar heat collection device 1 is connected to the inclined pipe 5a, while the other end thereof is connected to the inclined pipe 5b. Accordingly, the heat medium flowing through the inclined pipe 5a during a normal operation is a heat medium before being heated by the solar heat collection device 1, while the heat medium flowing through the inclined pipe 5b is a heat medium heated by the solar heat collection device 1. In the heat medium channel 2 of the solar heat collection device 1, the heat medium flows from the end portion connected to the inclined pipe 5a to the end portion connected to the inclined pipe 5b, so that the heat medium circulates through the solar heat collection device 1.

Thus, there is formed such a structure that when the heat medium is to be discharged from the heat medium channel 2 and the inclined pipes 5a, 5b, it is possible to cause the heat medium to flow from the top to the bottom depending on the inclinations of the heat medium channel 2 and the inclined pipes 5a, 5b. Accordingly, for discharging the heat medium, a vent 15 having a vent valve 15a is provided at the highest position of the heat medium channel 2, and the vent valve 15a of the vent 15 is opened, so that air can be introduced into the vent 15 when heat medium is to be discharged.

The heat medium channel 2 of each solar heat collection device 1 is provided with the vent 15 described above. The vent 15 includes a vent channel branching towards an upper side at a position where the height position of the heat medium channel 2 is substantially the highest, and also includes a vent valve 15a provided in the vent channel. The vent channel is at the highest position in each heat medium channel 2, and air can be introduced into the heat medium channel 2 from the upper end via the vent valve 15a. In addition, the upper end portion of the vent channel is connected to a header 31.

The vent channel and the heat medium channel 2 are made of tubes. Further, the vent channel is so connected that it has two branches which may be T-shaped or Y-shaped with respect to the heat medium channel 2. Moreover, the vent channel is formed into a shape branching in two directions at a position connected to the heat medium channel 2. In this way, when air flows from the vent channel to the highest position in the looped heat medium channel 2, air will flow into the heat medium channel 2 in two directions from the vent channel.

As discussed above, by providing the vent valve 15a in the middle of the vent channel, a vent 15 is thus formed which can take air into the heat medium channel 2 when the vent valve 15a is opened. Basically, such vent valve 15a may be any type as long as it can be opened and closed, but it should be normally closed, and is opened only when the heat medium is to be discharged, as described above.

Further, in the heat medium channel 2, the heat medium is constantly flowing by virtue of the pump. As a result, the heat medium channel 2 is under a positive pressure, and during a normal operation of the solar heat collection system, it is necessary to constantly close the vent valve 15a of the vent 15 to prevent the heat medium from flowing out of the vent 15. Basically, the vent valve 15a may be any type as long as it is openable and closable, but it is preferable that the vent valve 15a has a high durability. Further, such a vent valve 15a may be a solenoid valve or a valve that can be manually opened and closed. However, it is preferable to use a solenoid valve configured to be opened and closed manually in order to open the valve at a power failure. Moreover, when the vent valve 15a is formed of a solenoid valve, a battery serving as a backup power supply may be provided, so that the vent valve 15a can be operated by an electric power from the battery even at the time of a power failure.

The header 31 is provided to put into mutual communication the vents 15 of the heat medium channels 2 in the plurality of solar heat collection devices 1. Here, the header 31 itself is a pipe body and is connected in a state of communicating with the upper end portions of pipe bodies serving as vent channels for the vents 15 of the respective heat medium channels 2.

The header 31 is basically one pipe, and a plurality of vents 15 are connected as described above. It should be noted that the header 31 and the vents 15 are in a state of being sealed except for an intake port (air intake port) 32 which will be described later, thus forming a state in which a gas such as air or a liquid will not enter and exit except those going through the intake port 32.

The intake port 32 is an upper end opening of an intake port pipe provided at the highest position of the pipe serving as the header 31. The intake port pipe is provided extending upwardly from the highest position of the pipe serving as the header 31, has a U-shaped bent shape, while its upper end opening for introducing air faces downwardly, thus inhibiting the rainwater or the like from entering the intake port pipe.

Basically, one intake port 32 is provided in one header 31, but a plurality of intake ports 32 may also be provided. Here, the intake port 32 is not provided with a valve, basically it is normally open and can not be closed. However, it is also possible to provide a valve along the intake port 32 to open or close the intake port.

A drain container 16 is disposed at a position lower than the positions of the inclined pipes 5 to which a heat medium channel 2 of a solar heat collection device 1 is connected, such solar heat collection device 1 being located at the lowest position among a plurality of solar heat collection devices 1. The container 16 is connected to the inclined pipes 5 acting as discharge paths when discharging the heat medium from the heat medium channel 2 to the drain container 16. Specifically, the drain container 16 is connected to a pipe 5c located at the right ends of the inclined pipes 5.

A valve 17 is provided in the middle of the pipe 5c. From the valve 17, the pipe 5c on the inclined pipe 5a side and the drain container 16 are connected to each other by a pipe 18a. Meanwhile, from the valve 17, a pipe 5c on the inclined pipe 5b side and the drain container 16 are connected to each other through a pipe 18b. It should be noted that the valve 17 is normally in a closed state.

Further, a valve (not shown) is provided at a connection between the pipe 18b and the pipe 5c. By opening this valve, a heat medium flowing through the inclined pipe 5b can be received by the drain container 16 via the pipe 5c and the pipe 18b.

Moreover, a heat medium flowing through the inclined pipe 5a is fed into the drain container 16 through the pipes 5c,18a.

Further, a pump 20 is provided for delivering the heat medium from the drain container 16 to the cold-side tank 6. Moreover, a discharge pipe 21 is connected to the drain container 16, and the pump 20 is located in the middle of the discharge pipe 21.

On the other hand, a discharge pipe 22 is provided in parallel to the inclined pipes 5a, 5b between the inclined pipes 5a, 5b. One end of the discharge pipe 22 is bent toward the cold-side tank 6, while the other end of the discharge pipe 22 is connected to the discharge pipe 21.

Therefore, the heat medium received in the drain container 16 can be sent to the cold-side tank 6 via the discharge pipes 21, 22 by virtue of the pump 20, and can be stored in the cold-side tank 6.

In the solar heat collection system having such a configuration, during a normal operation, the heat medium is sent from the cold-side tank 6 to the inclined pipe 5a by a pump (not shown). Then, the heat medium is sent from the inclined pipe 5a to the heat medium channel of each solar heat collection device 1. Subsequently, the heat medium heated by the sunlight is moved from the inclined pipe 5b through a connecting pipe 11 and stored in the hot-side tank 7. The heat medium stored in the hot-side tank 7 is sent to a power generation system by pipeline (not shown) to generate an electric power using a turbine.

The heat medium whose temperature has been lowered by being used for power generation is returned to the cold-side tank 6 by pipeline (not shown), and again the heat medium is sent from the cold-side tank 6 to the inclined pipe 5b by a pump (not shown), and then heated in each solar heat collection device 1. The heated medium is then stored in the hot-side tank 7.

By performing such a process, it is possible to stably supply the heat medium to the power generation system. That is, the heat medium stored in the hot-side tank 7 is sent to a heat exchanger in the power generation system to heat a water to change it into a steam so as to rotate the turbine of the power generation system to generate electric power. The heat medium used in generating the steam in the power generation system and whose temperature has decreased is returned to the cold-side tank 6.

A portion of the heat medium flowing through the inclined pipe 5a is fed to the drain container 16 via the pipe 5c and the pipe 18a, and is sent from the drain container 16 to the cold-side tank 6 via the discharge pipes 21, 22 by virtue of the pump 20, and stored in the cold-side tank 6.

On the other hand, for example, if there is a concern that the temperature of the heat medium flowing through the heat medium channel 2 drops due to maintenance or a power failure or the like and a solidification occurs in the heat medium, the heat medium can be discharged from the heat medium channel 2 as follows.

Namely, the vent valve 15a of the vent 15 provided at the highest position of the heat medium channel 2 of each solar heat collection device 1 is opened to introduce air into the heat medium channel 2, followed by opening the valve located at the connection between the pipe 18b and the pipe 5c.

In this way, the heat medium flows from the heat medium channel 2 of each solar heat collection device 1 into the inclined pipes 5 (5a, 5b) by virtue of gravity. Further, this heat medium flows through the inclined pipes 5 (5a, 5b) by virtue of gravity and is then sent to the drain container 16 through the pipes 18a and 18b, respectively.

The heat medium received in the drain container 16 is then sent to the cold-side tank 6 via the discharge pipes 21, 22 using the pump 20, and is stored in the cold-side tank 6.

Therefore, the heat medium to be discharged from the plurality of solar heat collection devices 1 can be so discharged by virtue of gravity, without having to set the cold-side tank 6 at a position lower than the solar heat collection devices 1.

Here, in the solar heat collection devices 1 when the vent valves 15a of the heat medium channels 2 are opened at substantially the same time, the heat medium will flow from the heat medium channel 2 of each solar heat collection devices 1 almost simultaneously to the inclined pipes 5. At this time, since the heat medium channels 2 of the solar heat collection devices 1 are connected to the same inclined pipes 5, and because of the heat medium flowing from the plurality of heat medium channels 2 connected to the upper side of the inclination of the inclined pipes 5, a pressure will apply to the heat medium channels 2 connected to the lower side of the inclination of the inclined pipes 5 lower than the above plurality of heat medium channels 2, causing a possibility that the heat medium flows back in an opposite direction against the discharge direction of the heat medium of the heat medium channels (a direction toward the lower side of the inclination).

At this moment, in the heat medium channels 2 into which heat medium has flowed back from the inclined pipes 5, there is a possibility that heat medium will flow out of vents 15.

In this case, since the vent valves 15a are opened, the back-flowed heat medium will flow out of the vents 15. On the other hand, since the vents 15 are connected to the header 31, the heat medium flowing out of the vents 15 will flow into the header 31 without directly flowing out of the vents 15.

Therefore, even if the heat medium flows backwardly as described above, it is still possible to inhibit the heat medium from flowing out. Here, at the time of discharging the heat medium, even if the heat medium may flow backwardly in some of the heat medium channels 2, the heat medium in all the heat medium channels 2 will eventually flow out to the drain container 16. Therefore, if the capacity of the header 31 is larger than an outflow amount of the heat medium before the backflow in the heat medium channels 2 gets to a stop, the heat medium will be accumulated in the header 31. In this case, there is a high possibility that the heat medium will flow from the lowest vent 15 among the vents 15 connected to the header 31, and reach out to the header 31. On the other hand, heat medium that has flowed out into the header 31, before being cooled and solidified, and
at the time the flowing-out gets stopped, the heat medium will return from the lowest vent 15 to the heat medium channel 2 having the lowest vent 15, and thus discharged to the drain container 16.

Further, if an amount of the heat medium flowing out of a vent 15 to the header 31 is larger than the capacity of the header 31, the heat medium that has flowed into the header 31 will flow out of the intake port 32 to the outside of the header 31. In this case, even if many vents 15 are connected to the header 31, only one intake port 32 allows the heat medium to flow out. For example, if around the intake port 32, a structure is provided to prevent a human from entering and a drain tank (container) is provided to receive and store the heat medium flowed out, there will not be any problem even if the heat medium flows out.

Moreover, since a structure for dealing with an outflow of a solvent is not provided corresponding to each vent 15, and such a structure can be provided only at one intake port 32 for handling many vents 15, it is possible to greatly reduce the cost for dealing with an outflow of the heat medium.

Further, although it is necessary to open vents 15 at the time of discharging the heat medium as described above, during a normal operation, it is necessary to prevent a heat medium pressurized by a pump from leaking out of the heat medium channel 2. In this case, when a vent valve 15a is broken or out of order, there is a possibility that the heat medium may flow out of the vent 15. In view of this, as described above, the present embodiment makes it possible to prohibit a leakage of the heat medium to the outside and to cope with the leakage at a low cost, even if the heat medium leaks from the intake port 32 by any chance.

### (Second Embodiment)

A second embodiment of the present invention will be described below.

Fig. 3 shows a schematic configuration of the main portion of a solar heat collection system according to the second embodiment. In the solar heat collection system of the second embodiment, rather than the intake port 32, but a pressurized gas holder (gas tank: gas introducing device) 23 in which a compressed gas is stored is connected to the header 31 of the first embodiment.

In the present embodiment, the pressurized gas holder 23 is connected to the header 31, the vent valve 15a of the vent 15 is opened at the time of discharging the heat medium. Then, the pressurized gas holder 23 is opened to introduce the pressurized gas into the header 31. In this way, the pressurized gas can be introduced into the heat medium channels 2 to discharge the heat medium.

At this moment, when the heat medium flows backward as described above, if a pressure of the pressurized gas in the header 31 is higher than a pressure applied to the heat medium, it is possible to prevent the backflow of the heat medium. On the other hand, if a pressure for the backflow of the heat medium is higher than the pressure of a pressurized gas introduced into the header 31, it is impossible to completely prevent a backflow of the heat medium, but it is possible to prevent the heat medium from leaking out.

In this case, if there is not any element communicating with the outside such as the intake port 32 or the like in the header 31, the header 31 together with the pressurized gas holder 23 will be in a sealed state, rendering it possible to prevent an outflow of the heat medium. Moreover, it is possible to inhibit the heat medium from leaking out during a normal operation even if the vent valve 15a is not functional.

### (Third Embodiment)

A third embodiment of the present invention will be described below.

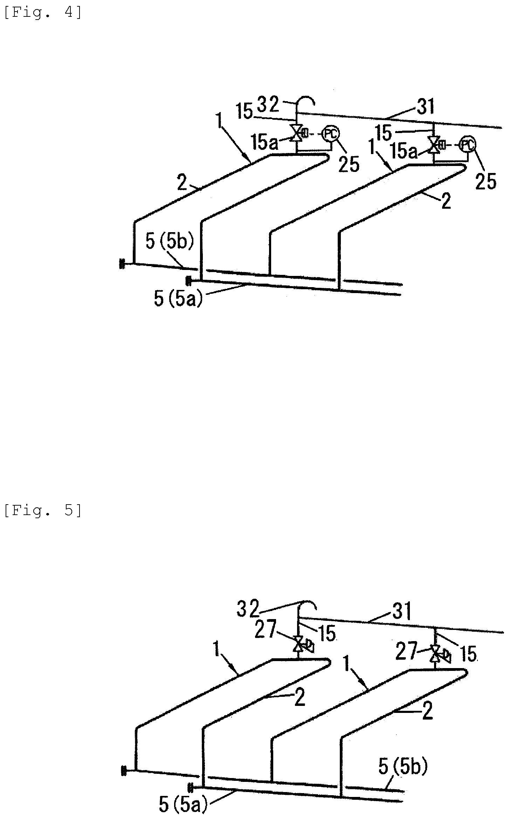

Fig. 4 shows a schematic configuration of the main portion of a solar heat collection system according to the third embodiment.

The solar heat collection system of the third embodiment is provided with a pressure gauge 25 serving as pressure measuring means for measuring a pressure of the heat medium within a vent 15 of a solar heat collection system of the first embodiment, rendering it possible to control the opening and closing of the vent valve 15a based on a pressure within the vent 15.

The vent valve 15a is for example a solenoid valve that is electrically backed up by a battery and can operate even at a power failure. Further, the vent valve 15a has a control device (vent control means) (not shown) for controlling the opening and closing of the solenoid valve. The control device is so configured that a pressure of the pressure gauge 25 can be inputted as data into the control device.

When a signal indicating a pressure inputted from the pressure gauge 25 (measuring a pressure in a heat medium channel 2 at a vent 15) is higher than a predetermined pressure, the control device of the vent valve 15a operates to forbid the opening of the vent valve 15a. Namely, when a pressure of the heat medium in the vent 15 is equal to or higher than a predetermined pressure, the control device operates to perform a control such that the vent valve 15a will not be opened even if a signal is inputted into the vent valve 15 indicating that the vent valve 15a should be opened. Further, after a pressure of the heat medium in the vent 15 falls below a predetermined pressure and the vent valve 15a is opened, the vent valve 15a is controlled so that it is closed when a pressure inside the vent 15 becomes equal to or higher than a predetermined pressure

Accordingly, for discharging the heat medium, a pressure of the heat medium in a vent valve 15a which is a solenoid valve in each vent 15, is not released if the pressure is not lower than an atmospheric pressure serving here as a predetermined pressure. Here, when the heat medium can flow into the drain container 16 on the heat medium discharge side of the heat medium channel 2, in a state in which the heat medium has been drawn to the drain container 16 side by a gravity, the inertia of the heat medium channel 2 (Including the vent channel of a vent 15) except for a vent 15 that causes a backflow as described above, will become a negative pressure which is lower than the atmospheric pressure. Once the vent valve 15a is opened in such a state, the heat medium will flow into the drain container 16. However, as described above, in a heat medium channel 2 which is lower than other heat medium channels 2, the heat medium will flow back. In this case, the pressure in the vent 15 becomes equal to or higher than the atmospheric pressure serving as a predetermined pressure. At this moment, it is possible to prevent a backflow of the heat medium by not opening the vent valve 15a or closing an opened vent valve 15a. Here, the predetermined pressure is, for example, an atmospheric pressure, but it is preferably within a pressure range beginning from a pressure slightly lower than the atmospheric pressure up to the atmospheric pressure.

As a result, even when the heat medium flows backward as described above, it is still possible to prevent the heat medium from flowing out into the header 31 by not opening or closing the vent valve 15a. As a result, when the heat medium flows out into the header 31, there is a concern that the heat medium cools and solidifies in the header 31, but the heat medium can be prevented from solidifying in the header 31. In addition, even if the heat medium flows out of the vent 15 due to an operation failure, a damage, a control bug, an error or the like in the vent valve 15a, it is still possible to inhibit the heat medium from leaking out, so as to reduce the cost in handling the leakage of the heat medium, as discussed above. On the other hand, although the installation position of the pressure gauge 25 for measuring a pressure of the heat medium is a heat medium channel 2, such installation position may be inside the vent valve 15a of the vent channel of the vent 15 (on the side opposite to the header 31 in the vicinity of the vent valve 15a on the main body side of the heat medium channel 2) .

### (Fourth Embodiment)

The fourth embodiment of the present invention will be described below.

Fig. 5 shows a schematic configuration of the main portion of a solar heat collection system according to the fourth embodiment. In the solar heat collection system of the fourth embodiment, the vent valve 15a of the solar heat collection system of the first embodiment is replaced by a back pressure valve 27.

The back pressure valve 27 is in a state of urging the valve body with a spring and can be opened when the pressure of the heat medium inside the back pressure valve 27 becomes equal to or lower than a predetermined pressure determined by the urging force of the spring. On the other hand, although there is for example a back pressure valve configured to be opened when the pressure of the heat medium becomes equal to or higher than a predetermined pressure, the present embodiment provides a configuration that can be opened when the heat medium inside the back pressure valve 27 becomes a predetermined pressure or less. Here, like the vent valve 15a described above, the back pressure valve 27 is provided in the vent channel of a vent 15. When the pressure in the vent channel which is located inside the back pressure valve 27 (on the side opposite to the header 31 side of the heat medium channel 2) becomes lower than a pressure set within a pressure rang beginning from the atmospheric pressure (serving as a predetermined pressure) to a pressure slightly lower than the atmospheric pressure, the back pressure valve 27 is opened. In addition, the predetermined pressure is determined by the urging force of the spring provided in the back pressure valve 27. For example, the spring presses the valve body of the back pressure valve 27 from the outside (the header side) towards the open side (opposite to the valve seat) using a pressure that is the atmospheric pressure or a pressure slightly lower than the atmospheric pressure. In a vent 15, when the pressure in a heat medium channel 2 is higher than a predetermined pressure, the valve body of the back pressure valve 27 will be pressed towards the valve seat against the urging force of the spring by virtue of the pressure of the heat medium, so that the back pressure valve 27 is closed. On the other hand, when the pressure in the heat medium channel 2 becomes equal to or lower than the predetermined pressure, the valve body pressed by the urging force of the spring will move from the valve seat against the pressure of the heat medium, so that the back pressure valve 27 is opened.

In the present embodiment, when the pressure in the back pressure valve 27 becomes lower than the atmospheric pressure, the back pressure valve 27 can be opened. When the pressure in the back pressure valve 27 is lower than the atmospheric pressure in a state in which the back pressure valve 27 is opened, the back pressure valve 27 is closed.

Basically, the operation of the back pressure valve 27 is substantially the same as that of the controlled vent valve 15a of the third embodiment, and substantially the same action and effect as the third embodiment can be obtained without using the control device, thus making It possible to reduce the cost.

### (Fifth Embodiment)

The fifth embodiment of the present invention will be described below.

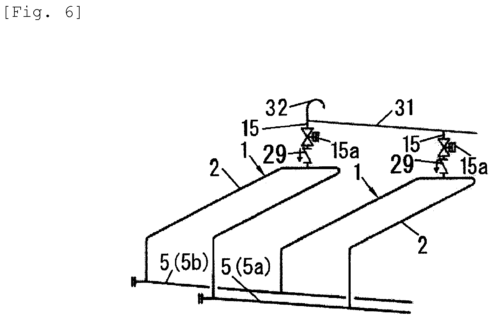

Fig. 6 shows a schematic configuration of the main portion of a solar heat collection system according to the fifth embodiment. In the solar heat collection system of the fifth embodiment, a check valve 29 is provided in addition to the vent valve 15a in each vent 15 of the solar heat collection system of the first embodiment.

In the present embodiment, a vent 15 is composed of a vent channel, a vent valve 15a, and a check valve 29. The check valve 29 is provided in the vent channel on the lower side (inner side) of the vent valve 15a, i.e., on the heat medium channel 2 side, thereby preventing an outflow of the backflowing heat medium from the vent 15. Here, the heat medium will not reach the vent valve 15a if it does not exceed the check valve 29. Further, as shown in Fig. 6, the check valve 29 allows the heat medium or air to flow from an upper side (an outer side) to a lower side (inner side), while preventing a flow from the lower side to the upper side.

In the present embodiment, since the check valve 29 is provided, it is impossible for the heat medium to exceed the check valve 29 to flow out of the vent 15. Further, if a pressure applied to the heat medium is eliminated so that the heat medium flows backward, air can flow inwardly in a state in which the vent valve 15a is opened.

In this way, the check valve 29 makes it possible to prevent a leakage of the heat medium from the vent 15 to the header 31, as in the third and fourth embodiments, and it is also possible to inhibit the heat medium from solidifying in the header 31.

Further, even if the check valve 29 and the vent valve 15a are broken down or damaged, it is still possible to prevent the heat medium from flowing out and to reduce the cost in handling the heat medium outflow.

### Explanation of Reference Numerals

- 1:: solar heat collection device
- 2:: heat medium channel
- 5:: inclined pipes (discharge route)
- 15:: vent
- 15a:: vent valve
- 23:: pressurized gas holder (gas introducing device)
- 25:: pressure gauge (pressure measuring means)
- 27:: back pressure valve
- 29:: check valve
- 31:: header
- 32:: Intake port

## Claims

1. A solar heat collection system having a plurality of heat medium channels (2) for heating a heat medium by virtue of solar heat and allowing the heat medium to flow, said solar heat collection system being capable of discharging the heat medium from the plurality of heat medium channels (2) through the same discharge route, by introducing a gas into the heat medium channels (2) from vents (15) provided respectively on the heat medium channels (2), **characterised in that** the solar heat collection system includes a header (31) which is a pipe connecting a plurality of the vents (15), the vents (15) being configured to introduce the gas into the heat medium channels (2) through the header (31).

2. The solar heat collection system according to claim 1, wherein the header (31) is provided with an intake port (32) which introduces air into the header (31).

3. The solar heat collection system according to claim 1, wherein the header (31) is provided with a gas introducing device (23) that introduces a compressed gas into the header (31).

4. The solar heat collection system according to claim 1, wherein the vents (15) can be opened when a pressure within the heat medium channels (2) is lower than an outer pressure.

5. The solar heat collection system according to any one of claims 1 - 4, further comprising: pressure measuring means (25) for measuring a pressure in the heat medium channels (2) ; and vent control means for opening the vents (15) when a pressure measured by the pressure measuring means (25) is equal to or lower than a predetermined pressure.

6. The solar heat collection system according to any one of claims 1 - 4, wherein a check valve (29) is provided in each vent (15).

7. The solar heat collection system according to any one of claims 1 - 4, wherein a back pressure valve (27) is provided in each vent (15).

## Patentansprüche

1. Solarwärme-Sammelsystem mit einer Vielzahl von Wärmemediumkanälen (2) zum Erwärmen eines Wärmemediums aufgrund von Sonnenwärme und zum Fließenlassen des Wärmemediums, wobei das Solarwärme-Sammelsystem in der Lage ist, das Wärmemedium aus der Vielzahl von Wärmemediumkanälen (2) über den gleichen Abgabeweg abzugeben, indem ein Gas in die Wärmemediumkanäle (2) aus Lüftungen (15) eingeführt wird, die jeweils an den Wärmemediumkanälen (2) vorgesehen sind,
**dadurch gekennzeichnet, dass**
das Solarwärme-Sammelsystem einen Sammler (31) umfasst, der ein Rohr ist, das eine Vielzahl von Lüftungen (15) verbindet, wobei die Lüftungen (15) so konfiguriert sind, dass sie das Gas durch den Sammler (31) in die Wärmemediumkanäle (2) einleiten.

2. Solarwärme-Sammelsystem nach Anspruch 1, wobei der Sammler (31) mit einer Einlassöffnung versehen ist, die Luft in den Sammler (31) einführt.

3. Solarwärme-Sammelsystem nach Anspruch 1, wobei der Sammler (31) mit einer Gaseinleitungsvorrichtung (23) versehen ist, die ein komprimiertes Gas in den Sammler (31) einleitet.

4. Solarwärme-Sammelsystem nach Anspruch 1, bei dem die Lüftungen (15) geöffnet werden können, wenn ein Druck innerhalb der Wärmemediumkanäle (2) niedriger als ein Außendruck ist.

5. Solarwärme-Sammelsystem nach einem der Ansprüche 1 bis 4, ferner umfassend: Druckmessmittel (25) zum Messen eines Drucks in den Wärmemediumkanälen (2); und Lüftungssteuermittel zum Öffnen der Lüftungen (15), wenn ein durch die Druckmessmittel (25) gemessener Druck gleich oder niedriger als ein vorbestimmter Druck ist.

6. Solarwärme-Sammelsystem nach einem der Ansprüche 1 - 4, wobei in jeder Lüftung (15) ein Kontrollventil (29) vorgesehen ist.

7. Solarwärme-Sammelsystem nach einem der Ansprüche 1 - 4, wobei in jeder Lüftung (15) ein Gegendruckventil (27) vorgesehen ist.

## Revendications

1. Système de collecte de chaleur solaire présentant une pluralité de canaux de milieu chauffant (2) pour chauffer un milieu chauffant grâce à la chaleur solaire et permettre au milieu chauffant de s'écouler, ledit système de collecte de chaleur solaire étant capable de faire sortir le milieu chauffant de la pluralité de canaux de milieu chauffant (2) par le biais du même itinéraire de sortie, en introduisant un gaz dans les canaux de milieu chauffant (2) depuis des évents (15) situés respectivement sur les canaux de milieu chauffant (2), **caractérisé en ce que** le système de collecte de chaleur solaire inclut un collecteur (31) qui est un tuyau raccordant une pluralité des évents (15), les évents (15) étant configurés pour introduire le gaz dans les canaux de milieu chauffant (2) par le biais du collecteur (31).

2. Système de collecte de chaleur solaire selon la revendication 1, dans lequel le collecteur (31) est pourvu d'un orifice d'admission (32) qui introduit de l'air dans le collecteur (31).

3. Système de collecte de chaleur solaire selon la revendication 1, dans lequel le collecteur (31) est pourvu d'un dispositif d'introduction de gaz (23) qui introduit un gaz comprimé dans le collecteur (31).

4. Système de collecte de chaleur solaire selon la revendication 1, dans lequel les évents (15) peuvent s'ouvrir lorsqu'une pression dans les canaux de milieu chauffant (2) est inférieure à une pression extérieure.

5. Système de collecte de chaleur solaire selon l'une quelconque des revendications 1 à 4, comprenant en outre : un moyen de mesure de pression (25) pour mesurer une pression dans les canaux de milieu chauffant (2) ; et un moyen de commande d'évent pour ouvrir les évents (15) lorsqu'une pression mesurée par le moyen de mesure de pression (25) est inférieure ou égale à une pression prédéterminée.

6. Système de collecte de chaleur solaire selon l'une quelconque des revendications 1 à 4, dans lequel un clapet anti-retour (29) est situé dans chaque évent (15).

7. Système de collecte de chaleur solaire selon l'une quelconque des revendications 1 à 4, dans lequel un clapet de contre-pression (27) est situé dans chaque évent (15).
